# EUROPEAN PATENT SPECIFICATION

(11) **EP 4 454 972 B1**
(45) Date of publication and mention of the grant of the patent: **15.10.2025**
(21) Application number: 23802131.5
(22) Date of filing: 28.09.2023
(51) Int. Cl.: B61L 27/20, B61L 15/00, B61L 27/40, B61L 25/02

(54) **TRAIN DEPARTURE METHOD BASED ON ON-SIGHT MODE AUTHORISATION**
ZUGABFAHRTSVERFAHREN AUF BASIS VON EINER AUTORISIERUNG AUF SICHT ZU FAHREN
PROCÉDÉ DE DÉPART DE TRAIN BASÉS SUR UNE AUTORISATION DU MODE À VUE

(30) Priority: 09.03.2023 CN 202310218990
(43) Date of publication of application: 30.10.2024
(73) Proprietor: CRSC RESEARCH & DESIGN INSTITUTE GROUP CO., LTD., Fengtai District Beijing 100070 (CN)
(72) Inventor: YUE, Chaopeng, Beijing 100070 (CN); CHEN, Zhiqiang, Beijing 100070 (CN); HUANG, Jia, Beijing 100070 (CN); JIANG, Ming, Beijing 100070 (CN); CHEN, Lihua, Beijing 100070 (CN); YU, Xiaoquan, Beijing 100070 (CN); SU, Xiaoling, Beijing 100070 (CN)
(74) Representative: Meissner Bolte Partnerschaft mbB
(86) International application number: PCT/CN2023/122817
(87) International publication number: WO 2024/183275

(56) References cited:
- EP-B1- 1 942 041
- CN-A- 107 161 179
- CN-A- 110 733 536
- CN-A- 115 092 213
- CN-A- 115 179 996
- CN-A- 116 001 874
- KR-B1- 101 164 767
- UNISIG: "ERTMS/ETCS System Requirements Specification, Chapter 3, Principles", 13 May 2016 (2016-05-13), pages 1 - 204, XP093189498, Retrieved from the Internet <URL:https://www.era.europa.eu/era-folder/archived-set-specifications-3-etcs-b3-r2-gsm-r-b1>
- "ERTMS/ETCS System Requirements Specification, Chapter 4, Modes and Transitions", 13 May 2016, UNISIG, article UNISIG: "ERTMS/ETCS System Requirements Specification, Chapter 4, Modes and Transitions", pages: 1 - 75, XP093189499
- "ERTMS/ETCS System Requirements Specification, Chapter 5, Procedures", 13 May 2016, UNISIG, article UNISIG: "ERTMS/ETCS System Requirements Specification, Chapter 5, Procedures", pages: 1 - 100, XP093189500
- "Chapter 6: Radio Block Centre (Doc. No. 06E2365A)", ERTMS SYSTEM REQUIREMENTS SPECIFICATION, MANAGEMENT SYSTEM, BRUSSELS, no. version 5A, 31 July 1998 (1998-07-31), pages 6/1 - 6/23, XP007904575

## Description

### TECHNICAL FIELD

The present application relates to the technical field of rail transit, in particular to a method and system for departure based on on sight mode authorization.

### BACKGROUND

In the prior art, the following two manners are usually adopted for departure:
(1) departure in a human responsible manner by a driver:
   in the field of urban rail transit, the driver directly observes a display of a ground signal to drive a train to operate at a low speed, initial positioning of the train is completed after the train passes a ground balise, and then the conditions for acquiring a subsequent movement authority are met.

On general-speed railways, the driver first inputs station and track information by means of a man-machine interface to complete a rough positioning record of the train, thereby facilitating on-board equipment performing line data initialization; and then the driver directly observes the display of the ground signal to drive the train to operate at a low speed, initial positioning of the train is completed after the train passes the ground signal, and then a train operation monitoring and recording function is available.

(2) departure by on-board safety equipment reading ground track circuit code sending information:
in the field of high-speed railways in China, regardless of CTCS-3 level lines or CTCS-2 level lines, at a departure station of the train, the train is required to depart in a partial monitoring mode at CTCS-2 level. In such mode, after the on-board equipment reads track code sending authority information, a ceiling speed monitoring line with the speed limit being 45 Km/h is generated, the train is allowed to advance, but the train is not informed of how far it can go. When line conditions change, a track circuit will provide prohibition information, and then the on-board equipment directly brake and stop the train. Therefore, the solution is equivalent to informing the train of two-dimensional information on signal development and shutdown, initial positioning of the train is completed after the train passes the ground balise, and then the conditions for acquiring the subsequent movement authority are met.

Thus, when the train departs, the on-board equipment will be powered on to start operation. Since the train is still at rest, accurate and safe initial positioning information cannot be acquired, data information of ahead lines cannot be acquired, it is also hard for ground control equipment to send an effective movement authority to inform the departure direction of the train.

### SUMMARY

The present application aims to provide a method and system for departure based on visual authorizatior, which is generally known as "On Sight Mode" authorization, but is referred to synonymously hereinafter as visual authorization.

. Visual authorization with departure authority conditions is transmitted by means of train-ground wireless communication, thereby monitoring the safe operation of a train by means of on-board equipment.

In order to achieve the above purpose, the present application provides the method for departure based on visual authorization defined in the appended independent claim 1.

Further, the determining, by means of a radio block center system according to current situations, whether visual authorization can be carried out may comprise
receiving, by means of the radio block center system, a position report sent by the on-board equipment in the visual mode; or
receiving, by means of the radio block center system, information sent by external equipment or determining, according to internal logic, that a latest visual authorization range is changed.

Further, states of the visual mode may comprise an authorized state and an unauthorized state; and
the state of the visual mode is displayed by means of a man-machine interface of the on-board equipment.

Further, the visual authorization instruction may comprise
a visual authorization message M2 and a balise list packet under visual authorization;
the visual authorization message is authorization based on a monitoring distance, and the monitoring distance is an allowable operation distance range for the train; if the train is allowed to depart, the monitoring distance is greater than 0 m;
the balise list packet under visual authorization is a passing balise group list within a monitoring distance range; and
the on-board equipment calculates a speed monitoring curve of the train according to an endpoint of the monitoring distance.

Further, the balise group list may be as follows:
when the train is only roughly positioned and the monitoring distance under visual authorization is greater than 0 m, the balise group list comprises: a track positioning balise, a departure direction outbound balise, and all physical and virtual balise groups within the range of a departure route and a departure section;
when the train is precisely positioned by means of a last related balise group (LRBG) and the monitoring distance under visual authorization is greater than 0 m, the balise group list comprises: all physical and virtual balise groups within the range from a current position of the train to a departure section; and
when the monitoring distance under visual authorization of the train is 0 m, the balise group list is an empty list.

Further, monitoring, by means of the on-board equipment according to the visual authorization instruction, the train in real time may comprise
if the train crosses a visual authorization endpoint, triggering emergency braking, enabling an overrunning mode, and implementing overrunning protection, wherein the visual authorization endpoint is the endpoint of the monitoring distance of the train;
if the train is not allowed to depart, enabling the monitoring distance of the train to be 0 m, that is, the visual authorization endpoint is a nose position of the train;
for a balise group existing in the balise list packet, the train normally passing the balise group in a passing process;
for a balise group which does not exist in the balise list packet, triggering, by means of the train, emergency braking, enabling the overrunning mode, and implementing overrunning protection;
when the on-board equipment does not receive the balise list packet sent by the radio block center system, the train being capable of passing all the balise groups on the way; and
when the balise list packet sent by the radio block center system and received by the on-board equipment is empty, the train being incapable of passing any balise group.

Further, the if the train is not allowed to depart, enabling the monitoring distance of the train to be 0 m may comprise :
when the train is in a stopped state, not triggering braking; and
when the train is in an operation state, triggering braking, and enabling the overrunning mode.

Further, the monitoring, by means of the on-board equipment according to the visual authorization instruction, the train in real time may further comprise s:
if the visual authorization message received by the on-board equipment is not updated after a predetermined time, triggering service braking for stop;
after the train is stopped, resetting, by means of the on-board equipment, the authorized monitoring distance to be 0 m, and clearing the balise list packet; and
switching the train from the authorized state of the visual mode to the unauthorized state for advancing.

Further, calculating, by means of the radio block center system, the monitoring distance range under visual authorization may further comprise:
binding, by means of the radio block center system, a departure route associated with an outbound signal according to the train departure information, calculating the monitoring distance under visual authorization, and confirming whether the train departure information is wrong,
wherein the monitoring distance under visual authorization is the sum of the lengths of the departure route and a departure section.

Further, the monitoring distance calculated by the radio block center system may be 0 m in any one of the following situations:
interlocking equipment for the radio block center system and the station where the train is located is interrupted;
the state of an axle counter between stations is an "occupied" state, and the radio block center system determines, according to internal logic, that a hidden train enters a section;
a plurality of train positioning data are detected to be bound to the same departure route;
a track state described in departure position information of the train is a non-occupied state;
a departure route signal corresponding to a track where the train is located is closed; and
a track outbound position described in the train departure information and initial positioning information of the train are not in the same track departure port direction.

The present application has the technical effects and advantages as follows: 1. in the present application, the function of safe checking the train departure information input by a driver is implemented by means of the ground equipment radio block center system without the specific position of the train, and visual authorization authority information is generated automatically in real time in combination with ahead departure route conditions, thereby providing same to the on-board safety equipment through a train-ground wireless channel so as to monitor the operation of the train; and the on-board equipment is responsible for monitoring the allowable safe driving distance of the train according to the visual authorization authority information, thereby effectively guaranteeing the safety and high efficiency of departure without relying on ground trackside equipment (including track circuits and ground signals), and facilitating engineering construction and reducing maintenance requirements;
2. in the present application, departure authority information does not use track circuit information and the ground signal display manner, so that no complex track circuit information encoding logic control function is needed, and the present application is also easily adapted to urban rails or overseas railways which implement train occupancy inspection in an axle counting manner, better facilitates engineering construction and reducing the maintenance requirements, and has the wider applicability; and
3. the present application is implemented on the basis of a train-ground wireless
communication system architecture, can be implemented in most existing train control systems by means of software adaptation without hardware modification, and has the wide easiness in implementation.

Other features and advantages of the present application will be described in the following specification, and some will become obvious in the specification, or will be understood by implementing the present application. The purposes and other advantages of the present application can be achieved and obtained by means of the structures pointed out in the specification, the claims and the drawings.

### BRIEF DESCRIPTION OF THE DRAWINGS

In order to explain technical solutions in embodiments of the present application more clearly, drawings needed in descriptions of the embodiments will be briefly introduced below. Obviously, the accompanying drawings in the following descriptions are some embodiments of the present application, and for those of ordinary skill in the art, other drawings can be obtained according to these accompanying drawings without involving any inventive effort.
FIG. 1 is a flow chart of steps of a method for departure based on visual authorization in an embodiment of the present application; and
FIG 2 is a structure diagram of a system for departure based on visual authorization in an embodiment of the present application.

### DETAILED DESCRIPTION OF THE EMBODIMENTS

The technical solutions in embodiments of the present application will be described clearly and completely below in conjunction with the accompanying drawings in the embodiments of the present application. Obviously, the described embodiments are only a part of embodiments of the present application, not all of them. On the basis of the embodiments of the present application, other embodiments can be obtained by those of ordinary skill in the art

The scope of protection of the present application is defined by the appended claims.

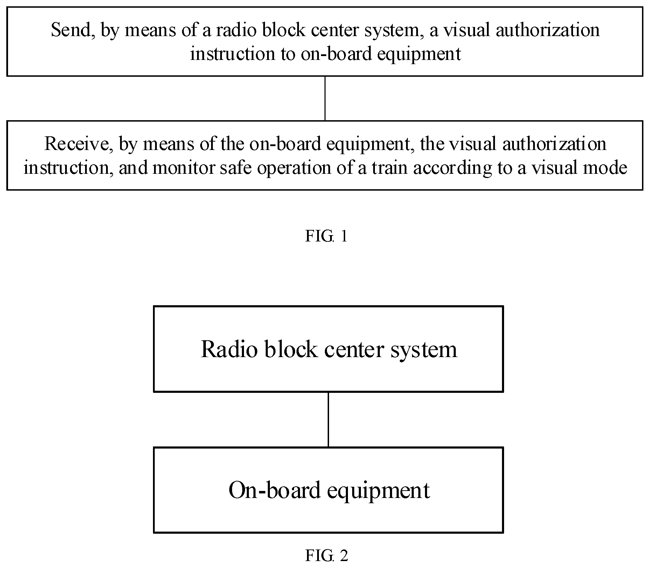

In order to overcome the defects in the prior art, for a starting train, an embodiment of the present application discloses a method for departure based on visual authorization, as shown in FIG. 1, includes the following steps:
determining, by means of a radio block center system according to current situations, whether visual authorization can be carried out;
when the radio block center system is capable of generating a visual authorization instruction, sending, by means of the radio block center system, the visual authorization instruction to on-board equipment through a train-ground wireless channel; and
receiving, by means of the on-board equipment, the visual authorization instruction, and monitoring safe operation of a train according to a visual mode.

The radio block center system determines, according to the current situations, whether visual authorization can be carried out, and the current situations include any one of the following situations:
the radio block center system receives train departure information and a movement authority request sent by the on-board equipment;
the radio block center system receives a position report sent by the on-board equipment in the visual mode; and
the radio block center system receives information sent by external equipment or determines, according to internal logic, that a latest visual authorization range is changed.

Considering that there are different driving requirements at different use places of the visual mode, the visual mode is divided into an "authorized state" and an "unauthorized state" by an ATP.

The "authorized state" is applied to authorization and overrunning protection of the starting train under departure based on visual authorization on a track under normal conditions; and
the "unauthorized state" is applied to track departure in special situations such as train-ground communication failures and the like or visual advancing in non-track areas such as station throats, intervals lines and the like.

The current operation state of the visual mode is displayed to a driver by means of a man-machine interface of the on-board equipment in real time, that is, the unauthorized state of the "visual" mode is marked with a yellow bottom border, and the authorized state is marked without a bottom border.

In the authorized state of the visual mode:
when departure route information is open, the man-machine interface displays the visual mode in the authorized state and the maximum allowable speed of 20 Km/h, which means that the driver can control the train to operate to a target stop point at the allowable speed; and
when the departure route information is closed, the man-machine interface displays the visual mode in the authorized state and an allowable speed of 0 Km/h, which means prohibition of movement of the train.

In the unauthorized state of the visual mode: the man-machine interface displays the visual mode in the unauthorized state and a fixed allowable speed, which means that the driver can continue to advance after carrying out confirmation once every time the driver controls the train to operate by a certain distance (for example, 200 m) or for a certain time (for example, 60 s).

In some specific embodiments, the on-board equipment of the starting train is powered on to be in a standby mode, and the train has no position at the beginning. Before the visual mode of the train is enabled, an on-board equipment startup process, a train integrity inspection operation process, input of the train departure information and confirmation of a visual mode authorization authority condition need to be completed sequentially; and
when the nose of train is located on a station track, the driver inputs, by means of the man-machine interface of the on-board equipment, the train departure information, including a station name, a track number and a selected departure direction.

An electronic map is downloaded in the on-board equipment in advance, and an electronic map document defines the following associated information, as shown in Table 1:

**Table 1**

| Station Name Pinyin Initials | Station Name | Station No. | Track No. | Mapping Track No. (Internal Line Allocation on Electronic Map) | Departure Direction | Outbound Balise No. |
|---|---|---|---|---|---|---|
| RQ | Ruoqiang Station | 066-1-02 | 1G | 3 | Up | Outbound balise No. 1 |
| | | | | | Down | Outbound balise No. 2 |
| | | | H1G | 1 | Up | Outbound balise No. 3 |
| | | | | | Down | Outbound balise No. 4 |

The train departure information being input by means of the man-machine interface of the on-board equipment includes the following operations:
inputting, by the driver on the man-machine interface, name pinyin information of a station where the train is located, searching, by means of the on-board equipment by the aid of the electronic map, the name pinyin information to acquire related station name information of the train for display, and confirming the related station name information of the train; and
inputting, by the driver, a track number and a departure direction of the train on the man-machine interface, acquiring, by means of the on-board equipment through automatic mapping of the electronic map, outbound balise number information of the train, and forming a train rough positioning information CTCS-136 packet, wherein the format of the packet can be adjusted in a customized manner; and the specific definitions of the format of the packet are as shown in Table 2.

**Table 2**

| S/N | Variable Name | Bit | Description | Value |
|---|---|---|---|---|
| | NID_PACKET | 9 | Information packet identification code | 136 |
| | L_PACKET | 13 | Information packet bit | 45 |
| | NID_C | 10 | Area No. | Determined according to train control engineering data sheet |
| | NID_BG | 14 | Outbound balise group No. | Determined according to train control engineering data sheet |

After the train departure information is input, the driver presses a "startup" button, and then the on-board equipment can be triggered to send the movement authority request and the train rough positioning information to the radio block center system (by means of M132+P0+CTCS136);
when a departure route signal is open, the radio block center system sends the visual authorization instruction to the on-board equipment; and after the on-board equipment receives the visual authorization instruction, the man-machine interface of the on-board equipment prompts, by means of a text or voice, the driver to confirm that the train is switched to the visual mode, and after the driver carries out the confirmation, the train enables the authorized state of the visual mode.

In some specific embodiments, the visual authorization instruction is composed of a monitoring distance allowing the train to move and a passing balise list. In the present application, reference is made to ETCS train-ground communication language definitions, and a visual authorization message M2 and a balise list packet under visual authorization are selected to constitute the visual authorization.

The visual authorization message is authorization based on the monitoring distance, and the monitoring distance is an allowable operation distance range for the train; if the train is allowed to depart, the monitoring distance is greater than 0 m; and the on-board equipment calculates a speed monitoring curve of the train according to an endpoint of the monitoring distance.

The slope data is calculated by default as per the most unfavorable slope of -6‰. The balise list packet under visual authorization is a passing balise group list within a monitoring distance range; and the balise group list is as follows:
when the train is only roughly positioned and the monitoring distance under visual authorization is greater than 0 m, the balise group list includes: a track positioning balise, a departure direction outbound balise, and all physical and virtual balise groups within the range of a departure route and a departure section;
when the train is precisely positioned by means of an LRBG and the monitoring distance under visual authorization is greater than 0 m, the balise group list includes: all physical and virtual balise groups within the range from a current position of the train to a departure section; and
when the monitoring distance under visual authorization of the train is 0 m, the balise group list is an empty list.

In some specific embodiments, monitoring, by means of the on-board equipment according to the visual authorization instruction, the train in real time includes:
if the train crosses a visual authorization endpoint, triggering emergency braking, enabling an overrunning mode, and implementing overrunning protection, wherein the visual authorization endpoint is the endpoint of the monitoring distance of the train;
if the train is not allowed to depart, enabling the monitoring distance of the train to be 0 m, that is, the visual authorization endpoint is a nose position of the train; when the train is in a stopped state, not triggering braking; when the train is in an operation state, triggering braking, and enabling the overrunning mode;
for a balise group existing in the balise list packet, the train normally passing the balise group in a passing process;
for a balise group which does not exist in the balise list packet, triggering, by means of the train, emergency braking, enabling the overrunning mode, and implementing overrunning protection;
when the on-board equipment does not receive the balise list packet sent by the radio block center system, the train being capable of passing all the balise groups on the way; and
when the balise list packet sent by the radio block center system and received by the on-board equipment is empty, the train being incapable of passing any balise group.

In some specific embodiments, the monitoring, by means of the on-board equipment according to the visual authorization instruction, the train in real time further includes:
if the visual authorization message received by the on-board equipment is not updated after a predetermined time (for example, 30 s), triggering service braking for stop; after the train is stopped, resetting, by means of the on-board equipment, the authorized monitoring distance to be 0 m, and clearing the balise list packet; and
the driver pressing a "visual" button to switch the train from the authorized state of the visual mode to the unauthorized state so as to drive the train forward.

In some specific embodiments, calculating in real time and providing, by means of the radio block center system, the monitoring distance range under visual authorization to the on-board equipment includes:
binding, by means of the radio block center system, a departure route associated with an outbound signal according to the train departure information, calculating the monitoring distance under visual authorization, and confirming whether the train departure information is wrong,
wherein the monitoring distance under visual authorization is the sum of the lengths of the departure route and a departure section.

The monitoring distance calculated by the radio block center system is 0 m in any one of the following situations:
interlocking equipment for the radio block center system and the station where the train is located is interrupted;
the state of an axle counter between stations is an "occupied" state, and the radio block center system determines, according to internal logic, that a hidden train enters a section;
a plurality of train positioning data are detected to be bound to the same departure route, thereby preventing the driver from inputting the incorrect departure information;
a track state described in departure position information of the train is a non-occupied state, thereby preventing the driver from inputting the incorrect departure information;
a departure route signal corresponding to a track where the train is located is closed; and
a track outbound position described in the train departure information and initial positioning information of the train are not in the same track departure port direction, thereby preventing the driver from inputting the incorrect departure information.

On the basis of the same inventive concept, the present application provides a system for departure based on visual authorization, as shown in FIG 2, including a radio block center system and on-board equipment of a train, wherein
the radio block center system is configured to receive train departure information and a movement authority request sent by the on-board equipment, and to generate a visual authorization instruction and send the visual authorization instruction to the on-board equipment when a departure route signal is open; and
the on-board equipment is configured to receive the visual authorization instruction, and to monitor safe operation of the train according to a visual mode.

With regard to the system in the above embodiment, the specific manners in which various unit modules execute operations are described in detail in the embodiments related to the method, and will not be described in detail here.

In the present application, the function of safe checking the train departure information input by the driver is implemented by means of the ground equipment radio block center system without the specific position of the train, and visual authorization authority information is generated automatically in real time in combination with ahead departure route conditions, thereby providing same to the on-board safety equipment through the train-ground wireless channel so as to monitor the operation of the train. The on-board equipment is responsible for monitoring the allowable safe driving distance of the train according to the visual authorization authority information, thereby effectively guaranteeing the safety and high efficiency of departure without relying on ground trackside equipment (including track circuits and ground signals), and facilitating engineering construction and reducing maintenance requirements.

Finally, it should be noted that the above description is only for illustrating the preferred embodiments of the present application, and is not intended to limit the present application; although the present application is illustrated in detail with reference to the above-mentioned embodiments, those skill in the art can still amend the technical solutions recited in the above-mentioned embodiments, or perform equivalent substitutions on part of the technical features thereof. The scope of protection of the present application is not limited by the described embodiments but is defined by the appended claims.

## Claims

1. A method for departure based on On Sight Mode authorization instruction, comprising:
determining, by means of a radio block center system according to current situations, whether On Sight Mode authorization instruction can be carried out;
when the radio block center system has determined that On Sight Mode authorization can be carried out, generating the On Sight Mode authorization instruction and sending the On Sight Mode authorization instruction to an on-board equipment, and
receiving, by means of the on-board equipment, the On Sight Mode authorization instruction, and monitoring, by means of the on-board equipment, safe operation of a train according to an On Sight Mode;
before the On Sight Mode of the train is enabled, an on-board equipment startup process, a train integrity inspection operation process, input of train departure information, and confirmation of an On Sight Mode authorization authority condition, are completed sequentially;
wherein the train departure information is input by means of a man-machine interface of the on-board equipment, and the input comprises:
inputting, on the man-machine interface, name pinyin information of a station where the train is located, searching, by means of the on-board equipment by the aid of an electronic map, the name pinyin information to acquire related station name information of the train, and confirming the related station name information of the train; and
inputting a track number and a departure direction of the train on the man-machine interface, acquiring, by means of the on-board equipment through the aid of the electronic map, outbound balise number information of the train, and forming a train rough positioning information packet;
after the train departure information is input, a movement authority request and the train rough positioning information packet are sent to the radio block center system by means of the on-board equipment;
wherein the radio block center system determines that On Sight Mode authorization can be carried out and sends the On Sight Mode authorization instruction to the on-board equipment, when a departure route signal is indicating that the departure route is open; and
after the on-board equipment receives the On Sight Mode authorization instruction, the train enables an authorized state of the On Sight Mode by means of confirmation;
wherein the determining, by means of a radio block center system according to current situations, whether On Sight Mode authorization instruction can be carried out comprises:
receiving, by means of the radio block center system, train departure information and a movement authority request sent by the on-board equipment, and when departure route information is indicating that the departure route is open, generating and sending, by means of the radio block center system, the On Sight Mode authorization instruction to the on-board equipment.

2. The method according to claim 1, wherein the determining, by means of a radio block center system according to current situations, whether On Sight Mode authorization instruction can be carried out further comprises:
receiving, by means of the radio block center system, a position report sent by the on-board equipment in the On Sight Mode; or
receiving, by means of the radio block center system, information sent by external equipment or determining, according to internal logic, that a latest On Sight Mode authorization range is changed.

3. The method according to claim 1, wherein
states of the On Sight Mode comprise an authorized state and an unauthorized state; and
the state of the On Sight Mode is displayed by means of a man-machine interface of the on-board equipment.

4. The method according to claim 1, wherein
the On Sight Mode authorization instruction comprises a On Sight Mode authorization message M2 and a balise list packet under On Sight Mode authorization;
the On Sight Mode authorization message is authorization based on a monitoring distance, and the monitoring distance is an allowable operation distance range for the train; if the train is allowed to depart, the monitoring distance is greater than 0 m;
the balise list packet under On Sight Mode authorization is a passing balise group list within a monitoring distance range; and
the on-board equipment calculates a speed monitoring curve of the train according to an endpoint of the monitoring distance.

5. The method according to claim 4, wherein the balise group list is as follows:
when the train is only roughly positioned and the monitoring distance under On Sight Mode authorization is greater than 0 m, the balise group list comprises: a track positioning balise, a departure direction outbound balise, and all physical and virtual balise groups within the range of a departure route and a departure section;
when the train is precisely positioned by means of a last related balise group (LRBG) and the monitoring distance under On Sight Mode authorization is greater than 0 m, the balise group list comprises: all physical and virtual balise groups within the range from a current position of the train to a departure section; and
when the monitoring distance under On Sight Mode authorization of the train is 0 m, the balise group list is an empty list.

6. The method according to claim 4, wherein monitoring, by means of the on-board equipment according to the On Sight Mode authorization instruction, the train in real time comprises:
if the train crosses a On Sight Mode authorization endpoint, triggering emergency braking, enabling an overrunning mode, and implementing overrunning protection, wherein the On Sight Mode authorization endpoint is the endpoint of the monitoring distance of the train;
if the train is not allowed to depart, enabling the monitoring distance of the train to be 0 m, that is, the On Sight Mode authorization endpoint is a nose position of the train;
for a balise group existing in the balise list packet, the train normally passing the balise group in a passing process;
for a balise group which does not exist in the balise list packet, triggering, by means of the train, emergency braking, enabling the overrunning mode, and implementing overrunning protection;
when the on-board equipment does not receive the balise list packet sent by the radio block center system, the train being capable of passing all the balise groups on the way; and
when the balise list packet sent by the radio block center system and received by the on-board equipment is empty, the train being incapable of passing any balise group.

7. The method according to claim 6, wherein the if the train is not allowed to depart, enabling the monitoring distance of the train to be 0 m comprises:
when the train is in a stopped state, not triggering braking; and
when the train is in an operation state, triggering braking, and enabling the overrunning mode.

8. The method according to claim 6, wherein the monitoring, by means of the on-board equipment according to the On Sight Mode authorization instruction, the train in real time further comprises:
if the On Sight Mode authorization message received by the on-board equipment is not updated after a predetermined time, triggering service braking for stop;
after the train is stopped, resetting, by means of the on-board equipment, the authorized monitoring distance to be 0 m, and clearing the balise list packet; and
switching the train from the authorized state of the On Sight Mode to the unauthorized state for advancing.

9. The method according to claim 2 or 4, wherein calculating, by means of the radio block center system, the monitoring distance range under On Sight Mode authorization comprises:
binding, by means of the radio block center system, a departure route associated with an outbound signal according to the train departure information, calculating the monitoring distance under On Sight Mode authorization, and confirming whether the train departure information is wrong,
wherein the monitoring distance under On Sight Mode authorization is the sum of the lengths of the departure route and a departure section.

10. The method according to claim 9, wherein the monitoring distance calculated by the radio block center system is 0 m in any one of the following situations:
interlocking equipment for the radio block center system and the station where the train is located is interrupted;
the state of an axle counter between stations is an "occupied" state, and the radio block center system determines, according to internal logic, that a hidden train enters a section;
a plurality of train positioning data are detected to be bound to the same departure route;
a track state described in departure position information of the train is a non-occupied state;
a departure route signal corresponding to a track where the train is located is closed; and
a track outbound position described in the train departure information and initial positioning information of the train are not in the same track departure port direction.

## Patentansprüche

1. Verfahren zur Abfahrt auf Basis von einer Anweisung zur Autorisierung, auf Sicht zu fahren, umfassend:
Bestimmen, mittels eines Radio-Block-Center-Systems gemäß aktuellen Situationen, ob die Anweisung zur Autorisierung, auf Sicht zu fahren, ausgeführt werden kann;
wenn das Radio-Block-Center-System bestimmt hat, dass die Autorisierung, auf Sicht zu fahren, ausgeführt werden kann, Erzeugen der Anweisung zur Autorisierung, auf Sicht zu fahren, und Senden der Anweisung zur Autorisierung, auf Sicht zu fahren, an eine bordeigene Einrichtung und
Empfangen, mittels der bordeigenen Einrichtung, der Anweisung zur Autorisierung, auf Sicht zu fahren, und Überwachen, mittels der bordeigenen Einrichtung, eines sicheren Betriebs eines Zugs gemäß einem Fahren auf Sicht;
wobei, bevor das Fahren des Zugs auf Sicht aktiviert wird, ein Startvorgang der bordeigenen Einrichtung, ein Betriebsvorgang einer Zugvollständigkeitskontrolle, eine Eingabe von Zugabfahrtsinformationen und eine Bestätigung einer Bedingung einer Autorisierungsfreigabe zum Fahren auf Sicht nacheinander abgeschlossen werden;
wobei die Zugabfahrtsinformationen mittels einer Mensch-Maschine-Schnittstelle der bordeigenen Einrichtung eingegeben werden und die Eingabe Folgendes umfasst:
Eingeben, in die Mensch-Maschine-Schnittstelle, von Namensinformationen auf Pinyin einer Station, an der sich der Zug befindet, Suchen, mittels der bordeigenen Einrichtung mit Hilfe einer elektronischen Karte, der Namensinformationen auf Pinyin, um zugehörige Informationen des Stationsnamens des Zugs zu erfassen, und Bestätigen der zugehörigen Informationen des Stationsnamens des Zugs; und
Eingeben einer Gleisnummer und einer Abfahrtsrichtung des Zugs in die Mensch-Maschine-Schnittstelle, Erfassen, mittels der bordeigenen Einrichtung mit Hilfe der elektronischen Kare, von ausgehenden Informationen über die Balisenummer des Zugs und Bilden eines Pakets mit Informationen über die grobe Position des Zugs;
wobei, nachdem die Zugabfahrtsinformationen eingegeben wurden, eine Fahrfreigabeanforderung und das Paket mit Informationen über die grobe Position des Zugs mittels der bordeigenen Einrichtung an das Radio-Block-Center-System gesendet werden;
wobei das Radio-Block-Center-System bestimmt, dass die Autorisierung, auf Sicht zu fahren, ausgeführt werden kann, und die Anweisung zur Autorisierung, auf Sicht zu fahren, an die bordeigene Einrichtung sendet, wenn ein Abfahrtsstreckensignal angibt, dass die Abfahrtsstrecke offen ist; und
wobei, nachdem die bordeigene Einrichtung die Anweisung zur Autorisierung, auf Sicht zu fahren, empfangen hat, der Zug einen autorisierten Zustand für das Fahren auf Sicht mittels einer Bestätigung aktiviert;
wobei das Bestimmen, mittels eines Radio-Block-Center-Systems gemäß aktuellen Situationen, ob die Anweisung zur Autorisierung, auf Sicht zu fahren, ausgeführt werden kann, Folgendes umfasst:
Empfangen, mittels des Radio-Block-Center-Systems, von Zugabfahrtsinformationen und einer Fahrfreigabeanforderung, die von der bordeigenen Einrichtung gesendet wird, und wenn die Abfahrtsstreckeninformationen angeben, dass die Abfahrtsstrecke offen ist, Erzeugen und Senden, mittels des Radio-Block-Center-Systems, der Anweisung zur Autorisierung, auf Sicht zu fahren, an die bordeigene Einrichtung.

2. Verfahren nach Anspruch 1, wobei das Bestimmen, mittels eines Radio-Block-Center-Systems gemäß aktuellen Situationen, ob die Anweisung zur Autorisierung, auf Sicht zu fahren, ausgeführt werden kann, ferner Folgendes umfasst:
Empfangen, mittels des Radio-Block-Center-Systems, eines Positionsberichts, der von der bordeigenen Einrichtung beim Fahren auf Sicht gesendet wird; oder
Empfangen, mittels des Radio-Block-Center-Systems, von Informationen, die von der externen Einrichtung gesendet werden, oder Bestimmen, gemäß einer internen Logik, dass der aktuelle Bereich für die Autorisierung, auf Sicht zu fahren, geändert wird.

3. Verfahren nach Anspruch 1, wobei
Zustände für das Fahren auf Sicht einen autorisierten Zustand und einen nicht autorisierten Zustand umfassen; und
der Zustand für das Fahren auf Sicht mittels einer Mensch-Maschine-Schnittstelle der bordeigenen Einrichtung angezeigt wird.

4. Verfahren nach Anspruch 1, wobei
die Anweisung zur Autorisierung, auf Sicht zu fahren, eine Nachricht M2 für die Autorisierung, auf Sicht zu fahren, und ein Balisenlistenpaket unter der Autorisierung, auf Sicht zu fahren, umfasst;
die Nachricht für die Autorisierung, auf Sicht zu fahren, eine Autorisierung auf Basis eines Überwachungsabstands ist und der Überwachungsabstand ein zulässiger Betriebsabstandsbereich für den Zug ist; wenn der Zug abfahren darf, ist der Überwachungsabstand größer als 0 m;
das Balisenlistenpaket unter der Autorisierung, auf Sicht zu fahren, eine Liste von passierten Balisengruppen innerhalb eines Überwachungsabstandsbereichs ist; und
die bordeigene Einrichtung eine Geschwindigkeitsüberwachungskurve des Zugs gemäß einem Endpunkt des Überwachungsabstands berechnet.

5. Verfahren nach Anspruch 4, wobei die Balisengruppenliste wie folgt ist:
Wenn der Zug nur grob positioniert ist und der Überwachungsabstand unter der Autorisierung, auf Sicht zu fahren, mehr als 0 m beträgt, umfasst die Balisengruppenliste: eine Gleispositionierungsbalise, eine ausgehende Balise für die Abfahrtsrichtung und alle physischen und virtuellen Balisengruppen innerhalb des Bereichs einer Abfahrtsstrecke und eines Abfahrtsteilstücks;
wenn der Zug mittels einer letzten zugeordneten Balisengruppe (LRBG) genau positioniert ist und der Überwachungsabstand unter der Autorisierung, auf Sicht zu fahren, mehr als 0 m beträgt, umfasst die Balisengruppenliste: alle physischen und virtuellen Balisengruppen innerhalb des Bereichs von einer aktuellen Position des Zugs zu einem Abfahrtsteilstück; und
wenn der Überwachungsabstand unter der Autorisierung, auf Sicht zu fahren, des Zugs 0 m beträgt, ist die Balisengruppenliste eine leere Liste.

6. Verfahren nach Anspruch 4, wobei das Überwachen, mittels der bordeigenen Einrichtung gemäß der Anweisung zur Autorisierung, auf Sicht zu fahren, des Zugs in Echtzeit Folgendes umfasst:
wenn der Zug einen Endpunkt für eine Autorisierung, auf Sicht zu fahren, überquert, Auslösen einer Notbremsung, Aktivieren eines Überfahrmodus und Umsetzen eines Überfahrschutzes, wobei der Endpunkt für eine Autorisierung, auf Sicht zu fahren, der Endpunkt des Überwachungsabstands des Zugs ist;
wenn der Zug nicht abfahren darf, Aktivieren des Überwachungsabstands des Zugs auf 0 m, das heißt, der Endpunkt für eine Autorisierung, auf Sicht zu fahren, ist eine Nasenposition des Zugs;
wobei bei einer Balisengruppe, die in dem Balisenlistenpaket vorhanden ist, der Zug normalerweise die Balisengruppe in einem Passiervorgang passiert;
bei einer Balisengruppe, die in dem Balisenlistenpaket nicht vorhanden ist, Auslösen, mittels des Zugs, einer Notbremsung, Aktivieren des Überfahrmodus und Umsetzen des Überfahrschutzes;
wobei, wenn die bordeigene Einrichtung das Balisenlistenpaket, das von dem Radio-Block-Center-System gesendet wird, nicht empfängt, der Zug in der Lage ist, alle diese Balisengruppen auf dem Weg zu passieren; und
wobei, wenn das Balisenlistenpaket, das von dem Radio-Block-Center-System gesendet und von der bordeigenen Einrichtung empfangen wird, leer ist, der Zug nicht in der Lage ist, eine Balisengruppe zu passieren.

7. Verfahren nach Anspruch 6, wobei, wenn der Zug nicht abfahren darf, das Aktivieren des Überwachungsabstands des Zugs auf 0 m Folgendes umfasst:
wenn sich der Zug in einem angehaltenen Zustand befindet, Nichtauslösen der Bremsung; und
wenn sich der Zug in einem Betriebszustand befindet, Auslösen der Bremsung und Aktivieren des Überfahrmodus.

8. Verfahren nach Anspruch 6, wobei das Überwachen, mittels der bordeigenen Einrichtung gemäß der Anweisung zur Autorisierung, auf Sicht zu fahren, des Zugs in Echtzeit ferner Folgendes umfasst:
wenn die Nachricht für die Autorisierung, auf Sicht zu fahren, die von der bordeigenen Einrichtung empfangen wird, nach einer vorbestimmten Zeit nicht aktualisiert wird, Auslösen einer Betriebsbremsung zum Anhalten;
nachdem der Zug angehalten hat, Zurücksetzen, mittels der bordeigenen Einrichtung, des autorisierten Überwachungsabstands auf 0 m und Löschen des Balisenlistenpakets; und
Umschalten des Zugs von dem autorisierten Zustand für das Fahren auf Sicht auf den nicht autorisierten Zustand zum Vorwärtsfahren.

9. Verfahren nach Anspruch 2 oder 4, wobei das Berechnen, mittels des Radio-Block-Center-Systems, des Überwachungsabstandsbereichs unter der Autorisierung, auf Sicht zu fahren, Folgendes umfasst:
Verbinden, mittels des Radio-Block-Center-Systems, einer Abfahrtsstrecke, die einem ausgehenden Signal zugeordnet ist, gemäß den Zugabfahrtsinformationen, Berechnen des Überwachungsabstands unter der Autorisierung, auf Sicht zu fahren, und Bestätigen, ob die Zugabfahrtsinformationen falsch sind,
wobei der Überwachungsabstand unter der Autorisierung, auf Sicht zu fahren, die Summe aus den Längen der Abfahrtsstrecke und eines Abfahrtsteilstücks ist.

10. Verfahren nach Anspruch 9, wobei der Überwachungsabstand, der von dem Radio-Block-Center-System berechnet wird, in einer beliebigen der folgenden Situationen 0 m beträgt:
das Koppeln der Einrichtung für das Radio-Block-Center-System und der Station, an der sich der Zug befindet, wird unterbrochen;
der Zustand eines Achszählers zwischen Stationen ist ein "belegter" Zustand und das Radio-Block-Center-System bestimmt gemäß einer internen Logik, dass ein verborgener Zug in ein Teilstück einfährt;
eine Vielzahl von Zugpositionierungsdaten wird zur Verbindung mit der gleichen Abfahrtsstrecke detektiert;
ein Gleiszustand, der in den Abfahrtspositionsinformationen des Zugs beschrieben ist, ist ein nicht belegter Zustand;
ein Abfahrtsstreckensignal, das einem Gleis entspricht, auf dem sich der Zug befindet, ist geschlossen; und
eine ausgehende Position des Gleises, die in den Zugabfahrtsinformationen und den Informationen zur anfänglichen Positionierung des Zugs beschrieben ist, befindet sich nicht in der gleichen Zugabfahrtsanschlussrichtung.

## Revendications

1. Procédé de départ basé sur une instruction d'autorisation de mode marche à vue, comprenant :
le fait de déterminer, au moyen d'un système de centre de bloc radio selon des situations actuelles, si une instruction d'autorisation de mode marche à vue peut être réalisée ;
lorsque le système de centre de bloc radio a déterminé que l'autorisation de mode marche à vue peut être réalisée, la génération de l'instruction d'autorisation de mode marche à vue et l'envoi de l'instruction d'autorisation de mode marche à vue à un équipement embarqué, et
la réception, au moyen de l'équipement embarqué, de l'instruction d'autorisation de mode marche à vue, et la surveillance, au moyen de l'équipement embarqué, de la sécurité de marche d'un train selon un mode marche à vue ;
avant que le mode marche à vue du train ne soit activé, un processus de démarrage d'équipement embarqué, un processus d'opération d'inspection d'intégrité de train, une saisie d'informations de départ de train et une confirmation d'une condition d'autorité d'autorisation de mode marche à vue sont effectués séquentiellement ;
dans lequel les informations de départ de train sont saisies au moyen d'une interface homme-machine de l'équipement embarqué, et la saisie comprend :
la saisie, sur l'interface homme-machine, d'informations pinyin de nom d'une gare où est situé le train, la recherche, au moyen de l'équipement embarqué à l'aide d'une carte électronique, des informations pinyin de nom afin d'acquérir des informations de nom de gare associées du train, et la confirmation des informations de nom de gare associées du train ; et
la saisie d'un numéro de voie et d'une direction de départ du train sur l'interface homme-machine, l'acquisition, au moyen de l'équipement embarqué grâce à l'assistance de la carte électronique, d'informations de numéro de balise en partance du train, et la formation d'un paquet d'informations de positionnement approximatif de train ;
après que les informations de départ de train sont saisies, une demande d'autorisation de mouvement et le paquet d'informations de positionnement approximatif de train sont envoyés au système de centre de bloc radio au moyen de l'équipement embarqué ;
dans lequel le système de centre de bloc radio détermine que l'autorisation de mode marche à vue peut être réalisée et envoie l'instruction d'autorisation de mode marche à vue à l'équipement embarqué, lorsqu'un signal d'itinéraire de départ indique que l'itinéraire de départ est ouverte ; et
après que l'équipement embarqué reçoit l'instruction d'autorisation de mode marche à vue, le train active un état autorisé du mode marche à vue au moyen d'une confirmation ;
dans lequel le fait de déterminer, au moyen d'un système de centre de bloc radio selon des situations actuelles, si l'instruction d'autorisation de mode marche à vue peut être réalisée comprend :
la réception, au moyen du système de centre de bloc radio, d'informations de départ de train et d'une demande d'autorisation de mouvement envoyées par l'équipement embarqué, et lorsque des informations d'itinéraire de départ indiquent que l'itinéraire de départ est ouvert, la génération et l'envoi, au moyen du système de centre de bloc radio, de l'instruction d'autorisation de mode marche à vue à l'équipement embarqué.

2. Procédé selon la revendication 1, dans lequel le fait de déterminer, au moyen d'un système de centre de bloc radio selon des situations actuelles, si l'instruction d'autorisation de mode marche à vue peut être réalisée comprend en outre :
la réception, au moyen du système de centre de bloc radio, d'un rapport de position envoyé par l'équipement embarqué dans le mode marche à vue ; ou
la réception, au moyen du système de centre de bloc radio, d'informations envoyées par un équipement extérieur ou la détermination, selon une logique intérieure, qu'une plage d'autorisation de mode marche à vue la plus récente est changée.

3. Procédé selon la revendication 1, dans lequel
des états du mode marche à vue comprennent un état autorisé et un état non autorisé ; et
l'état du mode marche à vue est affiché au moyen d'une interface homme-machine de l'équipement embarqué.

4. Procédé selon la revendication 1, dans lequel
l'instruction d'autorisation de mode marche à vue comprend un message d'autorisation de mode marche à vue M2 et un paquet de liste de balises sous autorisation de mode marche à vue ;
le message d'autorisation de mode marche à vue est une autorisation basée sur une distance de surveillance, et la distance de surveillance est une plage de distance de fonctionnement permise pour le train ; si le départ du train est permis, la distance de surveillance est supérieure à 0 m ;
le paquet de liste de balises sous autorisation de mode marche à vue est une liste de groupes de balises de passage au sein d'une plage de distance de surveillance ; et
l'équipement embarqué calcule une courbe de surveillance de vitesse du train selon une borne de la distance de surveillance.

5. Procédé selon la revendication 4, dans lequel la liste de groupes de balises est comme suit :
lorsque le train n'est qu'approximativement positionné et que la distance de surveillance sous autorisation de mode marche à vue est supérieure à 0 m, la liste de groupes de balises comprend : une balise de positionnement de voie, une balise en partance de direction de départ, et tous les groupes de balises physiques et virtuels au sein de la plage d'un itinéraire de départ et d'une section de départ ;
lorsque le train est positionné avec précision au moyen d'un dernier groupe de balises associé (LRBG) et que la distance de surveillance sous autorisation de mode marche à vue est supérieure à 0 m, la liste de groupes de balises comprend : tous les groupes de balises physiques et virtuels au sein de la plage entre une position actuelle du train et une section de départ ; et
lorsque la distance de surveillance sous autorisation de mode marche à vue du train est de 0 m, la liste de groupes de balises est une liste vide.

6. Procédé selon la revendication 4, dans lequel la surveillance, au moyen de l'équipement embarqué selon l'instruction d'autorisation de mode marche à vue, du train en temps réel comprend :
si le train franchit une borne d'autorisation de mode marche à vue, le déclenchement d'un freinage d'urgence, l'activation d'un mode de dépassement et la mise en œuvre d'une protection contre le dépassement, dans lequel la borne d'autorisation de mode marche à vue est la borne de la distance de surveillance du train ;
si le départ du train n'est pas permis, l'activation de la distance de surveillance du train à 0 m, c'est-à-dire que la borne d'autorisation de mode marche à vue est une position avant du train ;
pour un groupe de balises existant dans le paquet de liste de balises, le train passe normalement le groupe de balises dans un processus de passage ;
pour un groupe de balises qui n'existe pas dans le paquet de liste de balises, le déclenchement, au moyen du train, d'un freinage d'urgence, l'activation du mode de dépassement et la mise en œuvre de la protection contre le dépassement ;
lorsque l'équipement embarqué ne reçoit pas le paquet de liste de balises envoyé par le système de centre de bloc radio, le train étant capable de passer tous les groupes de balises en chemin ; et
lorsque le paquet de liste de balises envoyé par le système de centre de bloc radio et reçu par l'équipement embarqué est vide, le train étant incapable de passer un quelconque groupe de balises.

7. Procédé selon la revendication 6, dans lequel le fait que le départ du train n'est pas permis, activant la distance de surveillance du train pour qu'elle soit de 0 m, comprend :
lorsque le train est dans un état d'arrêt, le fait de ne pas déclencher le freinage ; et
lorsque le train est dans un état de fonctionnement, le fait de déclencher le freinage et d'activer le mode de dépassement.

8. Procédé selon la revendication 6, dans lequel la surveillance, au moyen de l'équipement embarqué selon l'instruction d'autorisation de mode marche à vue, du train en temps réel comprend en outre :
si le message d'autorisation de mode marche à vue reçu par l'équipement embarqué n'est pas mis à jour après un temps prédéterminé, le déclenchement du freinage de service pour l'arrêt ;
après que le train est arrêté, la remise à zéro, au moyen de l'équipement embarqué, de la distance de surveillance autorisée à 0 m, et l'effacement du paquet de liste de balises ; et
la commutation du train de l'état autorisé du mode marche à vue à l'état non autorisé pour avancer.

9. Procédé selon la revendication 2 ou 4, dans lequel le calcul, au moyen du système de centre de bloc radio, de la plage de distance de surveillance sous autorisation de mode marche à vue comprend :
la liaison, au moyen du système de centre de bloc radio, d'un itinéraire de départ associé à un signal en partance selon les informations de départ de train, le calcul de la distance de surveillance sous autorisation de mode marche à vue, et le fait de confirmer si les informations de départ du train sont erronées,
dans lequel la distance de surveillance sous autorisation de mode marche à vue est la somme des longueurs de l'itinéraire de départ et d'une section de départ.

10. Procédé selon la revendication 9, dans lequel la distance de surveillance calculée par le système de centre de bloc radio est de 0 m dans l'une quelconque des situations suivantes :
un équipement d'interverrouillage pour le système de centre de bloc radio et la gare où est situé le train est interrompu ;
l'état d'un compteur d'essieux entre les gares est un état « occupé », et le système de centre de bloc radio détermine, selon une logique interne, qu'un train caché entre dans une section ;
une pluralité de données de positionnement de train sont détectées comme étant liées au même itinéraire de départ ;
un état de voie décrit dans des informations de position de départ du train est un état non occupé ;
un signal d'itinéraire de départ correspondant à une voie où est situé le train est fermé ; et
une position en partance de voie décrite dans les informations de départ de train et les informations de positionnement initiales du train ne se trouvent pas dans la même direction de port de départ de voie.
